# EUROPÄISCHE PATENTANMELDUNG

(11) **EP 2 347 852 A1**
(43) Veröffentlichungstag der Anmeldung: **27.07.2011**
(21) Anmeldenummer: 10000746.7
(22) Anmeldetag: 26.01.2010
(51) Int. Cl.: B23K 26/24, B23K 26/14, B23K 26/00, B23K 26/10, B23K 26/42, B23K 26/02, B29C 65/00

(54) **Laserschweißvorrichtung zum Laserschweißen von flächigen Materialien**

(71) Anmelder: ProLas GmbH, 52146 Würselen (DE)
(72) Erfinder: Hänsch, Dr. Dirk, 4730 Hauset (BE)
(74) Vertreter: Albrecht, Ralf

(57) **Zusammenfassung**

Die vorliegende Erfindung betrifft eine Laserschweißvorrichtung zum Laserschweißen von flächigen Materialien mit einer Auflagefläche (1a), einer pneumatischen Andruckvorrichtung (3) und einem Laser (2). Die Andruckvorrichtung (3) umfasst einen Andruckkopf (5) mit einem Grundkörper (6), in dem eine Druckkammer (7) ausgebildet ist, die einlassseitig mit einer Druckluftquelle (4) und auslassseitig mit wenigstens einer an der Unterseite des Grundkörpers (6) vorgesehenen Luftaustrittsöffnung (10) verbunden ist. Der Andruckkopf (5) ist auf der Auflagefläche (1a) positionierbar und in Richtung der Auflagefläche (1a) und von dieser weg frei bewegbar geführt, so dass er nach einer Positionierung auf den auf der Auflagefläche (1a) liegenden Lagen zu verschweißenden Materials beim Austreten von Luft aus der Luftaustrittsöffnung (10) unter Bildung eines Spalts von der Auflagefläche (1a) abhebt. Der Andruckkopf (5) ist derart ausgebildet, dass ein vom Laser (2) abgegebener Laserstrahl (L) durch den Andruckkopf (5) auf den Schweißbereich trifft.

## Beschreibung

Die vorliegende Erfindung betrifft eine Lasserschweißvorrichtung zum Laserschweißen von flächigen Materialien, insbesondere von Folien und Textilien, mit einer Auflagefläche und einer pneumatischen Andruckvorrichtung, die wenigstens eine Druckluftquelle aufweist, um wenigstens zwei übereinander auf der Auflagefläche angeordnete Lagen flächigen Materials in einem Schweißbereich durch Druckluft gegen die Auflagefläche zu drücken, und einem Laser, der oberhalb der Auflagefläche angeordnet ist, um die Lagen flächigen Materials in dem Schweißbereich zu verschweißen. Des weiteren betrifft die Erfindung einen Andruckkopf für eine pneumatische Andruckvorrichtung zum Einsatz in einer solchen Laserschweißvorrichtung.

Eine Laserschweißvorrichtung zum Schweißen von flächigen Materialien dieser Art ist beispielsweise aus der EP 1 920 905 A1 der Anmelderin bekannt. Diese umfasst eine als Widerlager dienende Auflagefläche, auf welcher die zu verschweißenden flächigen Materialien platziert werden, sowie eine pneumatische Andruckvorrichtung mit mehreren Gasstrom-Erzeugern, mit deren Hilfe die zu verschweißenden Lagen flächigen Materials in einem vorgegebenen Schweißbereich gegen die Auflagefläche und damit gegeneinander gedrückt werden, um sie dort mittels eines Laserstrahls zu verschweißen. Die bekannte Vorrichtung hat sich in der Praxis durchaus bewährt. Als nachteilig wird jedoch zum Teil angesehen, dass die durch handelsübliche Blasdüsen erzeugbare Andruckkraft vergleichsweise gering ist und zudem hohe Volumenströme erfordert. Ferner kühlen die hohen Strömungsgeschwindigkeiten der Luft den Prozess ab, weshalb eine hohe Laserleistung erforderlich ist. Schließlich ist ein hoher steuerungstechnischer Aufwand erforderlich, um eine definierte Andruckkraft in dem Schweißbereich zu erzielen.

Vor diesem Hintergrund ist es Aufgabe der vorliegenden Erfindung, eine Laserschweißvorrichtung der eingangs genannten Art so auszubilden, dass die zu verschweißenden Materialien in dem Schweißbereich mit geringen baulichen und steuerungstechnischem Aufwand zuverlässig gegeneinander gedrückt werden können.

Diese Aufgabe ist erfindungsgemäß dadurch gelöst, dass die Andruckvorrichtung einen Andruckkopf mit einem Grundkörper aufweist, in dem eine Druckkammer ausgebildet ist, die einlassseitig über eine Druckluftzuführleitung mit der Druckluftquelle und auslassseitig über eine Luftauslassleitung mit wenigstens einer an der zur Auflagefläche weisenden Unterseite des Grundkörpers vorgesehenen Luftaustrittsöffnung verbunden ist, dass der Andruckkopf auf oder unmittelbar oberhalb der Auflagefläche positionierbar und in Richtung der Auflagefläche und von dieser weg frei bewegbar geführt ist, so dass er nach einer Positionierung des Andruckkopfes auf oder unmittelbar oberhalb von den auf der Auflagefläche liegenden Lagen zu verschweißenden Materials beim Austreten von Luft aus der Luftaustrittsöffnung unter Bildung eines Spalts von der Auflagefläche abhebt, und dass der Andruckkopf derart ausgebildet ist, dass ein vom Laser abgegebener Laserstrahl durch den Andruckkopf auf den Schweißbereich trifft. Bei dieser Ausgestaltung wird der Andruckkopf auf oder unmittelbar über den auf der Auflagefläche liegenden und durch eine Halte- und/oder Spannvorrichtung fixierten, zu verschweißenden Materialien positioniert. Wenn dem Andruckkopf dann Druckluft - alternativ kann auch ein anderes unter Druck stehendes Gas verwendet werden - zugeführt wird, bildet sich durch den Luftstrom, welcher durch die Luftauslassöffnung des Andruckkörpers austritt, ein Luftkissen mit einem geringen Spalt zwischen dem Andruckkopf und dem zu schweißenden Material aus, auf welchem der Andruckkopf schwebt. Gleichzeitig bewirkt das Luftkissen, dass die zu verschweißenden Materialien zuverlässig gegeneinander gepresst werden, wobei vergleichsweise nur geringe Luftmengen erforderlich sind, um den Druck aufrecht zu erhalten. Die so gegeneinander gedrückten Materialien können dann in herkömmlicher Weise durch einen Laserstrahl verschweißt werden, der durch den Andruckkopf auf den Schweißbereich gerichtet wird. Wichtig ist, dass die beiden Lagen von zu verschweißenden Materialien während des Schweißvorgangs und insbesondere vor der Inbetriebnahme des Andruckkopfes in Position gehalten werden. Hierzu ist die Halte- und/oder Spannvorrichtung vorgesehen. Diese kann beispielsweise so ausgestaltet sein, dass die untere Materiallage über Vakuum gegen die Auflagefläche gesaugt wird. In diesem Fall wird dann die obere Materiallage nicht besonders fixiert. Alternativ kann die Halte- und/oder Spannvorrichtung auch so ausgestaltet sein, dass eine oder beide Materiallagen über einen Spannrahmen fixiert werden. Auch ist eine Fixierung der Materiallagen untereinander und der unteren Lage an der Auflagefläche durch statische Aufladung möglich.

Gemäß einer Ausführungsform der Erfindung ist vorgesehen, dass eine zentrale Luftaustrittsöffnung in dem Grundkörper derart vorgesehen ist, dass der Laserstrahl etwa mittig durch die Luftaustrittsöffnung verläuft. Dabei ist zweckmäßigerweise die Druckkammer zentral in dem Grundkörper ausgebildet und an ihrer Oberseite mit einem lasertransparenten und druckfesten Fenster verschlossen, so dass ein vom Laser abgegebener Laserstrahl das Fenster, die Druckkammer, die Luftauslassleitung und die Luftaustrittsöffnung durchtritt und auf den Schweißbereich trifft. Bei dieser Ausgestaltung lässt sich die Andruckkraft, welche sich in dem Schweißbereich einstellt, in einfacher Weise aus der Fläche der Luftaustrittsöffnung und dem eingestellten Luftdruck berechnen, so dass der steuerungstechnische Aufwand für die Andruckvorrichtung gering ist. Dabei nimmt der Druck in dem Spalt zwischen dem Andruckkopf und den zu verschweißenden Materialien von der zentralen Luftaustrittsöffnung nach außen hin ab, während die Strömungsgeschwindigkeit zunimmt.

Zusätzlich kann vorgesehen sein, dass an der Unterseite des Grundkörpers Kanäle ausgebildet sind, die sich von der zentralen Luftaustrittsöffnung nach außen erstrecken und vorzugsweise eine geringe Tiefe besitzen. Durch die Kanäle wird dem Umstand Rechnung getragen, dass beim Beginn eines Schweißvorgangs die zu verschweißenden Materialien in Kontakt mit der Unterseite des Anschlusskopfes kommen und daran anhaften können. Dies ist insbesondere bei glatten Folien der Fall. Durch die Kanäle wird in diesem Fall die haftende Fläche unterbrochen und werden auch die Angriffsflächen für den Luftdruck deutlich vergrößert, so dass sich der Andruckkörper durch die Druckluft leicht von dem zu verschweißenden Material lösen lässt.

Gemäß einer weiteren Ausführungsform der Erfindung ist vorgesehen, dass die Druckkammer zentral in dem Grundkörper ausgebildet und an ihrer Oberseite und Unterseite mit einem lasertransparenten und druckfesten Fenster verschlossen ist, so dass ein vom Laser abgegebener Laserstrahl die Fenster und die Druckkammer durchtritt und auf den Schweißbereich trifft, wobei mehrere mit der Druckkammer verbundene Luftaustrittsöffnungen um das druckfeste Fenster an der Unterseite der Druckkammer herum vorgesehen sind. Bei dieser Ausführungsform sind anstelle einer zentralen Luftauslassöffnung mehrere Luftaustrittsöffnungen an der Unterseite des Grundkörpers vorgesehen. Auch hier besteht selbstverständlich die Möglichkeit, an der Unterseite des Grundkörpers Kanäle auszubilden, die von den Luftaustrittsöffnungen ausgehen und sich nach außen erstrecken.

Zweckmäßigerweise ist die wenigstens eine Luftaustrittsöffnung und/oder die der Luftaustrittsöffnung zugeordnete Luftauslassleitung düsenartig ausgebildet. Hierdurch werden hohe Strömungsgeschwindigkeiten und auch Querbeschleunigungen erzielt, die ebenfalls dazu beitragen, den Andruckkopf von einer gegebenenfalls anhaftenden Folie zu lösen.

Wenn während des Schweißvorgangs der Laser verfahren wird, muss der Andruckkopf notwendigerweise mit bewegt werden. In diesem Fall ist es sinnvoll, den Andruckkopf mit dem Laser zu verbinden und gemeinsam mit diesem parallel zu der Auflagefläche zu verstellen, wobei gewährleistet bleiben muss, dass der Andruckkopf weiterhin senkrecht zu der Auflagefläche bewegbar ist. Vorzugsweise ist er hierzu relativ zu dem Laser senkrecht zu der Auflagefläche bewegbar gehalten.

Schließlich kann der Andruckvorrichtung eine Steuereinrichtung zugeordnet sein, über welche die Stärke des von dem Andruckkopf gegen die Auflagefläche gerichteten Luftstroms einstellbar ist.

Hinsichtlich weiterer vorteilhafter Ausgestaltungen und Weiterbildungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: eine schematische Darstellung einer erfindungsgemäßen Vorrichtung zum Laserschweißen von flächigen Materialien, und
- Figur 2: den Druckverlauf in einem Pressspalt, der sich beim Betrieb zwischen dem Andruckkopf und der Oberfläche der zu verschweißenden Folie einstellt.

In der Zeichnung ist eine Laserschweißorrichtung zum Laserschweißen von flächigen Materialien und hier insbesondere von Folien und Textilien schematisch dargestellt. Die Vorrichtung umfasst einen Arbeitstisch 1, der eine horizontale Auflagefläche 1a bildet, auf der zwei deckend übereinanderliegende Folien F angeordnet sind.

Die Laserschweißvorrichtung umfasst einen Laser 2, der oberhalb der Auflagefläche 1a angeordnet ist, um die Folien F in einem Schweißbereich durch einen Laserstrahl L, der unter einem Winkel von 90° gegen die Auflagefläche 1a gerichtet wird, zu verschweißen. Weiterhin ist eine nicht dargestellte Halte- und/oder Spannvorrichtung vorgesehen, die dazu dient, die untere Folie F und insbesondere beide Folien F in Position zu halten. Beispielsweise kann die Halte- und/oder Spannvorrichtung eine Vakuumeinrichtung umfassen, welche die untere Folie F gegen die Auflagefläche zieht, wobei die obere Folie F dann nicht besonders fixiert ist. Alternativ kann auch ein Spannrahmen vorgesehen sein, welcher eine oder beide Folien F spannt und an der Auflagefläche positioniert. Ebenso ist es möglich, die beiden Folien F untereinander durch statische Aufladung zu fixieren.

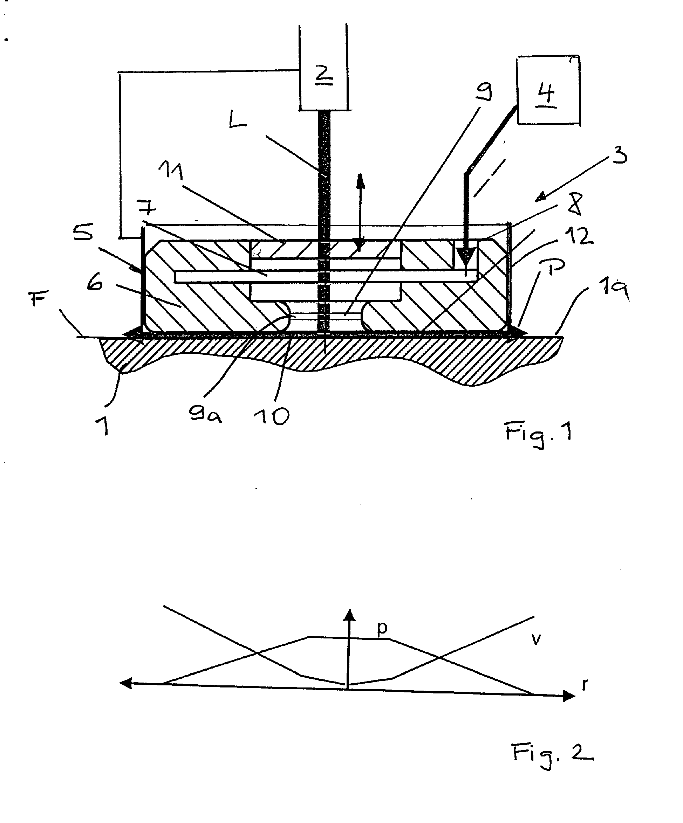

Zu der Laserschweißvorrichtung gehört ferner eine Andruckvorrichtung 3, um die beiden Folien F gegen die Auflagefläche 1a und damit gegeneinander zu drücken. Die Andruckvorrichtung 3 umfasst eine nur angedeutete Druckluftquelle 4 sowie einen Andruckkopf 5. Dieser weist einen im Wesentlichen zylindrischen Grundkörper 6 auf, in dem eine Druckkammer 7 zentral ausgebildet ist. Die Druckkammer 7 ist einlassseitig über eine in dem Grundkörper 6 ausgebildete Druckluftzuführleitung 8 mit der Druckluftquelle 4 verbunden. Konkret ist an dem von der Druckkammer 7 fernen Ende, d.h. im einlassseitigen Ende der Druckluftzuführleitung 8 ein Anschluss vorgesehen, über den ein zu der Druckluftquelle 4 führender Verbindungsschlauch an die Druckluftzuführleitung 8 angeschlossen werden kann. Auslassseitig ist die Druckkammer 7 über eine Luftauslassleitung 9 mit einer an der Unterseite des Grundkörpers 6 vorgesehenen Luftaustrittsöfffnung 10 verbunden. Wie in der Figur 1 gut erkennbar ist, ist die Luftaustrittsöffnung 10 zentral unterhalb der Druckkammer 7 in dem Grundkörper 6 vorgesehen und erstreckt sich der Luftauslassleitung 9 in vertikaler Richtung mittig durch den Grundkörper 6 von der Druckkammer 7 bis zur Luftaustrittsöffnung 10. Dabei besitzt die Luftauslassleitung 9 einen Durchmesser, der von der Druckkammer 7 bis hin zu einer Engstelle 9a kontinuierlich abnimmt und dann bis zur Luftaustrittsöffnung 10 wieder kontinuierlich zunimmt.

Die Oberseite der Druckkammer 7 ist durch ein lasertransparentes und druckfestes Fenster 11 verschlossen, so dass ein vom Laser 2 abgegebener Laserstrahl L durch den Andruckkopf 6 auf den Schweißbereich gerichtet werden kann.

Wie in der Figur 1 schematisch angedeutet ist, ist der zylindrische Grundkörper 6 des Andruckkopfes 5 in einer rohrförmig ausgebildeten Aufnahme 12 gehalten und darin in vertikaler Richtung bewegbar geführt (siehe Doppelpfeil in Figur 1). Die Aufnahme 12 wiederum ist mit dem Laser 2 verbunden und kann zusammen mit diesem verstellt werden. Insbesondere können durch die Verbindung der Laser 2 und der Andruckkopf 5 parallel zu der Auflagefläche 1a bewegt werden, um Schweißnähte beliebigen Verlaufs herzustellen.

Im Betrieb werden der Laser 2 und der mit diesem über die Aufnahme 12 verbundene Andruckkopf 5 an einer gewünschten Stelle oberhalb der Auflagefläche 1a und der darauf positionierten Folien F positioniert, an der die Folien F miteinander verschweißt werden sollen. Anschließend wird über die Druckluftquelle 4 dem Andruckkopf 5 Druckluft mit einem vorgegebenen Druck, der über eine Steuereinrichtung einstellbar ist, zugeführt. Dies hat zur Folge, dass sich in der Druckkammer 7 sowie den Leitungen 8, 9 ein Druck aufbaut. Wenn dieser ausreichend hoch ist, dringt Luft zwischen die Oberfläche der oberen Folie F und den Grundkörper 5, und in der Folge bildet sich zwischen den Folien F einerseits und dem Andruckkörper 5 andererseits ein Luftkissen P aus, auf welchem der Andruckkörper 5 schwebt. Dabei hebt der Andruckkörper 5 in der Aufnahme 12 geführt von dem Arbeitstisch minimal ab, so dass die aus der Luftaustrittsöffnung 9 abströmende Luft nach außen hin abströmen kann. Hier wirkt der sich einstellende Spalt als Drossel, die einen Druckaufbau in dem Spalt ermöglicht. Durch den Druck, dessen Kraft aus der Fläche der Luftaustrittsöffnung 10 und dem eingestellten Druck, mit welchem die Druckluft zugeführt wird, resultieren die zu verschweißenden Folien F zuverlässig gegeneinander und werden gegen die als Widerlager wirkenden Auflagefläche 1a gedrückt. Wie in der Figur 2 erkennbar ist, nimmt in dem Spalt zwischen dem Andruckkopf 5 und der Folienoberfläche der Druck nach außen hin ab und die Strömungsgeschwindigkeit zu.

Die auf diese Weise zusammengepressten Folien 1 werden dann mittels des Lasers 2 verschweißt. Dabei kann der Laserstrahl L durch den Andruckkörper 5 auf den Schweißbereich gerichtet werden, wobei er das Fenster 11, die Druckkammer 7 und die Luftauslassleitung 9 mit der Luftaustrittsöffnung 10 durchtritt.

## Patentansprüche

1. Laserschweißvorrichtung zum Laserschweißen von flächigen Materialien, insbesondere von Folien (F) und Textilien, mit einer Auflagefläche (1a) und einer pneumatischen Andruckvorrichtung (3), die wenigstens eine Druckluftquelle (4) aufweist, um wenigstens zwei übereinander auf der Auflagefläche (1a) angeordnete Lagen flächigen Materials in einem Schweißbereich durch Druckluft gegen die Auflagefläche (1a) zu drücken, und einem Laser (2), der oberhalb der Auflagefläche (1a) positioniert ist, um die Lagen flächigen Materials in dem Schweißbereich zu verschweißen, **dadurch gekennzeichnet, dass** die Andruckvorrichtung (3) einen Andruckkopf (5) mit einem Grundkörper (6) aufweist, in dem eine Druckkammer (7) ausgebildet ist, die einlassseitig über eine Druckluftzuführleitung (8) mit der Druckluftquelle (4) und auslassseitig über eine Luftauslassleitung (9) mit wenigstens einer an der zur Auflagefläche (1a) weisenden Unterseite des Grundkörpers (6) vorgesehenen Luftaustrittsöffnung (10) verbunden ist, dass der Andruckkopf (5) auf oder unmittelbar oberhalb der Auflagefläche (1a) positionierbar und in Richtung der Auflagefläche (1a) und von dieser weg frei bewegbar geführt ist, so dass er nach einer Positionierung des Andruckkopfes (5) auf oder unmittelbar oberhalb von den auf der Auflagefläche (1a) liegenden Lagen zu verschweißenden Materials beim Austreten von Luft aus der Luftaustrittsöffnung (10) unter Bildung eines Spalts von der Auflagefläche (1a) abhebt, und dass der Andruckkopf (5) derart ausgebildet ist, dass ein vom Laser (2) abgegebener Laserstrahl (L) durch den Andruckkopf (5) auf den Schweißbereich trifft.

2. Laserschweißvorrichtung nach Anspruch 1, **dadurch gekennzeichnet, dass** eine zentrale Luftaustrittsöffnung (10) in dem Grundkörper (6) derart vorgesehen ist, dass der Laserstrahl (L) etwa mittig durch die Luftaustrittsöffnung (10) verläuft.

3. Laserschweißvorrichtung nach Anspruch 2, **dadurch gekennzeichnet, dass** die Druckkammer (7) zentral in dem Grundkörper (6) ausgebildet und an ihrer Oberseite mit einem lasertransparenten und druckfesten Fenster (11) verschlossen ist, so dass ein vom Laser (2) abgegebener Laserstrahl das Fenster (11), die Druckkammer (7), die Luftauslassleitung (9) und die Luftaustrittsöffnung (10) durchtritt und auf den Schweißbereich trifft.

4. Laserschweißvorrichtung nach Anspruch 2 oder 3, **dadurch gekennzeichnet, dass** an der Unterseite des Grundkörpers Kanäle ausgebildet sind, die sich von der zentralen Luftaustrittsöffnung nach außen erstrecken.

5. Laserschweißvorrichtung nach Anspruch 1, **dadurch gekennzeichnet, dass** die Druckkammer zentral in dem Grundkörper ausgebildet und an ihrer Oberseite und Unterseite mit einem lasertransparenten und druckfesten Fenster verschlossen ist, so dass ein vom Laser abgegebener Laserstrahl die Fenster und die Druckkammer durchtritt und auf den Schweißbereich trifft, wobei mehrere mit der Druckkammer verbundene Luftaustrittsöffnungen um das druckfeste Fenster an der Unterseite der Druckkammer herum vorgesehen sind.

6. Laserschweißvorrichtung nach einem der vorherigen Ansprüche, **dadurch gekennzeichnet, dass** die wenigstens eine Luftaustrittsöffnung (10) und/oder die der Luftaustrittsöffnung (10) zugeordnete Luftauslassleitung (9) düsenartig ausgebildet ist.

7. Laserschweißvorrichtung nach einem der vorherigen Ansprüche, **dadurch gekennzeichnet, dass** der Andruckkopf (5) eine zylindrische Grundform aufweist.

8. Laserschweißvorrichtung nach einem der vorherigen Ansprüche, **dadurch gekennzeichnet, dass** der Andruckkopf (5) mit dem Laser (2) verbunden und gemeinsam mit diesem parallel zu der Auflagefläche (1a) verfahrbar ist, wobei der Andruckkopf (5) relativ zu dem Laser (2) senkrecht zu der Auflagefläche (1a) bewegbar gehalten ist.

9. Laserschweißvorrichtung nach einem der vorherigen Ansprüche, **dadurch gekennzeichnet, dass** der Andruckvorrichtung (3) eine Steuereinrichtung zugeordnet ist, über welche die Stärke des von dem Andruckkopf (5) gegen die Auflagefläche (1a) gerichteten Luftstroms einstellbar ist.

10. Andruckkopf mit einem Grundkörper (5), in dem eine Druckkammer (7) ausgebildet ist, an die einlassseitig eine Druckluftquelle (4) anschließbar ist und die auslassseitig über eine Luftauslassleitung (9) mit wenigstens einer an der Unterseite des Grundkörpers (6) vorgesehenen Luftautrittsöffnung (10) verbunden ist, wobei der Andruckkopf (5) derart ausgebildet ist, dass ein Laserstrahl (2) den Andruckkopf (5) von seiner Oberseite zu seiner Unterseite durchtreten kann.

11. Andruckkopf nach Anspruch 10, **dadurch gekennzeichnet, dass** eine zentrale Luftaustrittsöffnung (10) an der Unterseite des Grundkörpers (6) vorgesehen ist.

12. Andruckkopf nach Anspruch 11, **dadurch gekennzeichnet, dass** die Druckkammer (7) zentral in dem Grundkörper (6) ausgebildet und an ihrer Oberseite mit einem lasertransparenten und druckfesten Fenster (11) verschlossen ist, so dass ein Laserstrahl (2) durch das Fenster (11), die Druckkammer (7), die Luftauslassleitung und die Luftaustrittsöffnung den Grundkörper (6) durchtreten kann.

13. Andruckkopf nach einem der Ansprüche 10 bis 12, **dadurch gekennzeichnet, dass** an der Unterseite des Grundkörpers Kanäle ausgebildet sind, die sich von der zentralen Luftaustrittsöffnung nach außen erstrecken.

14. Andruckkopf nach Anspruch 10, **dadurch gekennzeichnet, dass** die Druckkammer zentral in dem Grundkörper ausgebildet und an ihrer Oberseite und Unterseite mit einem lasertransparenten und druckfesten Fenster verschlossen ist, so dass ein Laserstrahl durch die Fenster und die Druckkammer den Grundkörper durchtreten kann, wobei mehrere mit der Druckkammer verbundene Luftaustrittsöffnungen um das druckfeste Fenster an der Unterseite der Druckkammer herum vorgesehen sind.

15. Vorrichtung nach einem der Ansprüche 10 bis 14, **dadurch gekennzeichnet, dass** die wenigstens eine Luftaustrittsöffnung (10) und/oder die der Luftaustrittsöffnung (10) zugeordnete Luftauslassleitung (9) düsenartig ausgebildet ist.
